# EUROPEAN PATENT APPLICATION

(11) **EP 1 128 264 A2**
(43) Date of publication of application: **29.08.2001**
(21) Application number: 01301682.9
(22) Date of filing: 23.02.2001
(51) Int. Cl.: G06F 9/445

(54) **Self-exploding micro-installer**

(30) Priority: 28.02.2000 US 514857
(71) Applicant: Hewlett-Packard Company, Palo Alto, CA 94304 (US)
(72) Inventor: Barmettler, James W., Corvallis, OR 97330 (US)
(74) Representative: Colgan, Stephen James

(57) **Abstract**

When an electronic file (101) is created on one computer (202) and transferred to another (208), the file is useless if the recipient computer (208) does not have access to the application program by which the file (101) was created. In such instances, it is possible to avoid the problems created thereby if the computer file is embedded with appropriate executable instructions, which upon receipt at the destination computer (208), can automatically test for the presence of the requisite computer application. If no application is found, the executable code automatically downloads a copy from an authorized distribution source (210) through the internet (210, 212, 214), or other appropriate transmission means. The self-exploding micro-installer can also automatically install and initiate the application program on the destination computer (208).

## Description

### BACKGROUND OF THE INVENTION

With the advent of electronic file transfer over computer data networks that include local networks, wide area networks, and world-wide networks like the internet, electronic document transfers are becoming more common place. With few exceptions, all of these files require some sort of application program to be present on, or accessible to the receiving computer in order to read, edit, print or otherwise use the file. If a document's creator and a document's recipient don't have copies of the appropriate application program that is required to open and/or use a document, electronic file transfers between a sender and a receiver become meaningless.

At present, there is no way to know that when a document is sent to a computer that the recipient of the document will be able to use it. If the recipient does not have the right computer program available, the document or file is typically useless. In this era of electronic-commerce or "e-commerce" a mechanism by which a recipient of a file or document, (which requires a particular computer program to use it) could be assured of being able to read, edit, print or otherwise use the file would be an improvement over the prior art. Moreover, automating such a procedure would provide even more benefit so as to significantly improve electronic commerce.

### SUMMARY OF THE INVENTION

A method and apparatus automatically checks for the presence of predetermined required files on a computer. If the required files are not present or accessible, the method and apparatus attempts to down-load the required files from a computer or computer network from which the required files can be obtained.

The method involves the steps of concatenating, appending or merging executable code with a computer file or files (typically data files) requiring a particular application program to be opened, edited, printed and so forth. This combination of the executable code and data file can be sent from one computer to another computer over a data network, such as the Internet. When the combined data file and executable code is received at a destination computer, the executable code can be invoked whereupon it will check for the presence of the required computer application program(s) necessary to open, view or otherwise use the attached data file. If the requisite application program is not found on the destination computer, the self-exploding file automatically attempts to download the application from an authorized source of the program, e.g. a web site, or dial-up bulletin board computer, provided of course that the destination computer has the required communications capability and/or connectivity to access another computer or network.

### BRIEF DESCRIPTION OF THE DRAWINGS

Figure 1 shows a simplified block diagram of the steps of a method by which files can be sent from one computer to another computer whereupon at receipt by the receiving computer, the presence of a requisite application program is determined and automatically obtained so that the other included files can be opened.

Figure 2 shows a simplified block diagram of a computer network that might be used to automatically obtain application programs by a computer upon receipt of a pre-formulated data file containing executable code to test and download application software.

### DETAILED DESCRIPTION OF THE PREFERRED EMBODIMENT

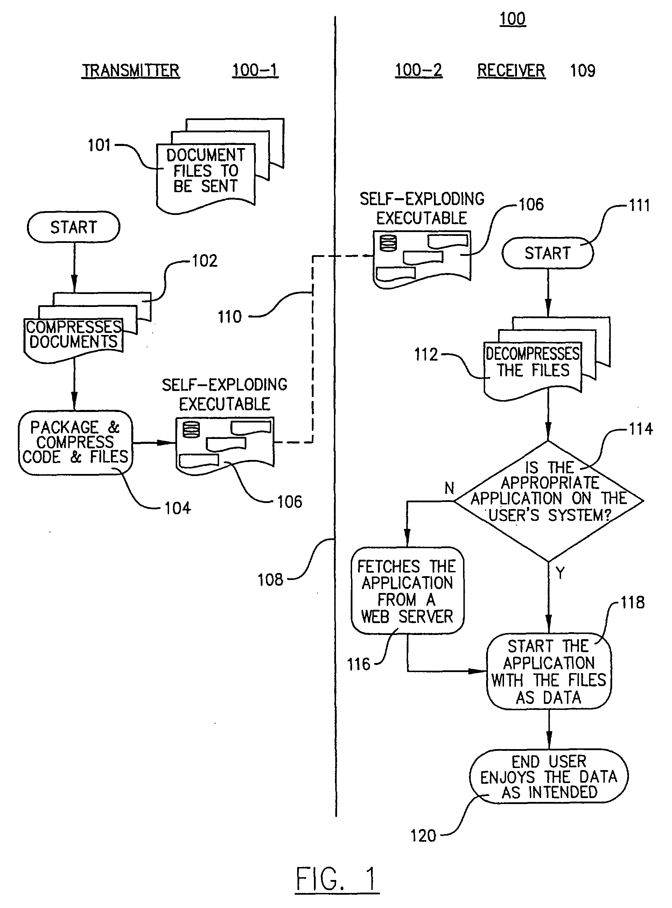

Figure 1 shows a simplified block diagram of the steps of a method 100 for opening a data file on a computer that requires a particular application program. By way of example, a letter, memorandum, or other documents 101 created under some sort of word processor, data base, spread sheet, computer aided design, graphics or other application program (for simplification purposes, referred to as a word processor) at one computer, i.e. a transmitting computer 100-1, typically requires a compatible copy of that program (not shown) at a receiving computer, 100-2, in order to open the documents 101. If the word processing application program is resident on, or accessible from the receiving computer, the document can readily be viewed, edited and printed. If however the word processing application program is not available on or accessible from the recipient computer, opening the files so as to make some use of them, is impossible rendering the electronic file transfer pointless.

In order to avoid such a situation, the method disclosed herein requires the construction of a composite file for transfer that is made up of both data files and executable code. The data files 101 are first preferably compressed 102 to reduce size and thereby decrease transmission time. Inasmuch as file compression is done only to expedite file transfer across a data network the step of compressing the data files is not needed per se. Alternate embodiments would therefore include omission of the data compression step. In a preferred embodiment, the file is transmitted via a data network and the advantages of the present invention are particularly visible in this use. It need not be so limited, however, since the present invention can have significant advantages when employed with other devices that provide files, such as data storage apparatus: magnetic or optical disk storage and the like.

Whether or not the files are compressed 102, executable program instructions are appended 104 to the files 101. The executable program instructions appended to the data files 101 are instructions that can be executed by the destination or receiving computer 100-2 (i.e. they are compatible with the destination computer) and which perform certain tasks at that computer when they are invoked to insure that the accompanying file can be opened.

In the case of the Microsoft, Inc. Windows™ Operating System, or Microsoft MS-DOS™ operating systems such files are commonly referred as .exe or "executable files" designating them as programs that are executed and run by the CPU.

The executable files can also be, ActiveX control, or plug-in files. In such instances the executable can be "delivered" to a user simply by being placed on a web page. If allowed by the end user, the user's browser will download, install, and begin execution of the ActiveX control or plug-in. This allows a web site to deliver any type of file via the Internet without requiring a user to navigate to a download page for the required viewing application.

In the preferred embodiment, the executable file attached to, or sent with, data files is written to include software to decompress the previously compressed files (if they files were compressed) and to search the hard drive of the computer on which it is run directory, (for example by searching a file allocation table of the computer hard disk drive) to detect the presence of the application program required to open and view the accompanying data file(s). Alternate embodiments would include using third-party compression and decompression programs, which might be resident on both the sending 100-1 and receiving 100-2 computers.

If the application program is not found, the executable code preferably invokes an internet browser, or other communication software and "logs" on to a computer, website or other remote computer from which the application program for the accompanying files can be obtained. The process of referred to as logging onto a computer involves the steps of establishing a communication between two or more computer by which data can be exchanged between the machines. How a log-on process works will of course depend upon the communication protocols used between the two machines, as those skilled in the art will recognize. The particular process of "logging on" to a computer is not germane to the invention disclosed herein.

The executable file preferably includes program instructions that automatically decompresses the file. This so-called self-exploding feature 106 is part of the function performed by the executable code.

The purpose behind the invention is to allow data file transfers across networks, including the Internet, such that the files can be used by the recipient, even if the recipient does not already have a copy of any requisite application. The self-exploding composite file (data and executable together) can be electronically transferred 110 to a destination computer or receiver 109 via a data network 108 such that upon decompression and execution of the composite file, the application program can be obtained by the recipient computer 100-2.

When the self-exploding files are received at the receiving computer 106, the composite file is preferably stored to a disk drive or other appropriate storage media for subsequent use. As the composite file is constructed to be an executable file, it can be started, run or executed as any other application program.

Upon invoking the execution of the executable code 111, the executable program instructions of the composite file decompresses any data files 112 that were previously compressed at the transmitter computer 100-1. After the files are decompressed, the recipient computer is checked 114 to determine if the computer has on its hard drive, the application program required to open the accompanying data files 114.

One way of determining if the requisite application program is on the computer is to search file allocation tables of the disk drive. If the application program is detected, the application can be invoked and the transferred files opened at the user's discretion 118. On the other hand, if the application program is not detected for any reason, the executable code that was bundled with the data files transmitted from the transmitter computer can, at the user's option, automatically fetch the application or any portion thereof.

Fetching a copy of a program can be readily accomplished by using the internet. Downloading software and data files is routinely performed using Internet browser programs (e.g. Internet Explorer™, Netscape Navigator™) from so-called web sites and the computers that embody them. For example, Hewlett-Packard Company operates a web site **(www.hp.com)** from which a variety of executable program files can be downloaded. Examples of such programs offered for free download from H-P include updated software drivers for various printers that are distributed by Hewlett-Packard Company.

In order to automatically fetch a file in which is embodied an application program, the executable code comprising the composite file first determines if the computer on which it is resident is coupled to some sort of data network, such as a local area network, a wide area network or the internet. The connection to the network must be initiated, and if such a connection is to an internet website, an internet browser or other software must be invoked by which downloading of the computer program can be requested from the website.

After the program is downloaded, the recipient computer can optionally store the application program in RAM or on hard disk for subsequent use at a later date. Of course, the foregoing presumes that requisite authorization to download the application program has been obtained from the copyright holder.

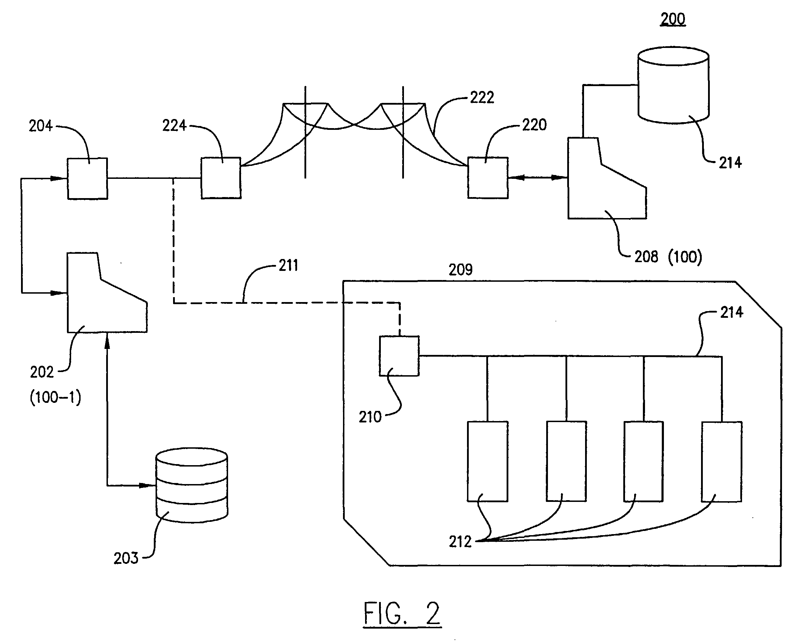

Figure 2 displays a simplified block diagram of computers and computer network that can practice the foregoing method.

In Figure 2, a first computer 202 is coupled to a first data network 209 comprised of one or more other computers 210, 212 and an appropriate transmission media 214. The first computer 202 typically communicates with the first network 209 and its computers through an appropriate interface device 204. In the first network 209 is a local area or wide area network such an interface might be an Ethernet controller or Ethernet hub. If the first network 209 is an internet website, the interface device 204 might be an ITU (International Telecommunications Union) compliant telephone mode or a cable modem, depending upon the media 211 linking the interface 204 to the first network 209.

As shown in Figure 1, a storage device 203 is also coupled to the first computer 202. Although most computers use magnetic disk storage devices to retain copies of an operating system, application programs and data files, alternate embodiments of storage media would include magnetic tape, RAM, ROM, EEPROM or equivalents thereof. While Figure 2 shows the storage media outside of the computer 202, almost all contemporary computers include such equipment within the physical chassis of the machine.

Figure 2 also shows a second computer 208 also having a mass storage device 214 coupled to it. When an application program such as a word processor, is invoked on the second computer 208, the application program typically resides on the local mass storage device 214. As is now commonplace, word processors, spread sheets, data bases, and even e-mail messages are created in the form of computer files that are created by an application program. After these files are created, they typically require at least a portion of the program that created them to be used to subsequently re-open or re-use them. In the network shown in Figure 2, a file created on the second computer 208 will typically reside on the mass storage device where the creating program is also stored.

With the recent advent of the internet, as well as the development and use of intranets, it is frequently desirable to transfer a file from one computer where it was created to another computer where it might be used, viewed, edited, printed or the like. With respect to Figure 2, a file created on the second computer 208 might be transferred to the first computer 202 over a data network. As shown in the figure, the second computer 208 is coupled to the first computer 202 through the public switched telephone network or PSTN 222 through modems 220 and 224 at opposite ends of the PSTN network 222 connections.

The many different file transfer methodologies that are well-known to those skilled in the art are not germane to an understanding of the invention disclosed herein. Such transfers might include direct dial up techniques using file transfer protocol (FTP). They might also include file transfers using the aforementioned web browser downloads whereby a computer acting as a website transfers files upon the request of computers that log onto it. What is pertinent to the method and apparatus disclosed herein is that a file was created at one computer using a particular computer program. When this file is transferred to another computer, which might not have the creating program, obtaining the necessary software can be automatically performed using files that were transferred to the destination or recipient computer. The file transferred by the second computer 208 to the first computer 202 include a relatively small amount of intelligent executable code that is appended to the data files that were created using some sort of application package, which may or may not be resident on the computer to which the files are to be sent.

Following the steps detailed above, when the first computer 202 receives the composite files from the second computer 208, the executable code-portion of the composite file can be invoked on the computer 202 at a user's convenience. The program is written to search the computer's disk storage device 203 or other memory to test for the presence of the application program that was used to create the accompanying data files (not shown). If the program is not detected or otherwise available to the first computer 202, the aforementioned application package can, at the user's election, attempt to obtain the appropriate application program.

In the preferred embodiment, a web server is contacted and asked to download the application program. Other embodiments would include contacting a computer coupled to a local or wide area data network 209 from which the application might be obtained or even used remotely without physically transferring a copy of the program. By executing the appropriate commands automatically and under software control, the recipient computer 202 can obtain a copy of the application program (or at least a sufficient portion thereof) required to open and view or edit the file created at the computer 202.

In the preferred embodiment the composite file (The combined executable to search and fetch an application that created data files accompanying data files.) from the source computer 208 and which is delivered to the recipient computer 202 is a compressed data file using an appropriate data compression algorithm, such as run-length encoding, variable length encoding, or substitutional compression, a number of which are known to those skilled in the art.

At least one computer data network 209 from which the first computer 202 might obtain at least a portion of an application program required to open files sent to it from the second computer 208 is the internet, including the world-wide web. As such, the network represented in Figure 2 by reference numeral 209 might be the internet, a local area network or some other wide area network. One computer 210 therein might be a web server from which the requisite application program might be obtained. Other computers 212 shown coupled to this server might be other unrelated web servers but also might be other machines to which software might be downloaded.

As set forth above, if the requisite application program can be obtained from another computer 210, accessing that computer might also be achieved if the media 211 linking the second computer to it, is some other appropriate media such as an Ethernet network. Other network technologies would be equally suited to transferring a copy of an application program, or a portion thereof, to the computer 208 requiring the program to open files.

Upon receipt of the self-exploding executable file at the destination computer as described above with respect to Figure 1, the executable search and fetch code decompresses data files (112 in Figure 1) and thereafter begins searching the computer's 202 memory and disk storage space 203 to determine if the application program is resident on the system 202. If the needed application program is present, the search and fetch program automatically invokes the application and opens the accompanying files 118. Alternatively, if the application program is missing, the search and fetch program fetches the application from the web server 210 or other machine comprising the network 209.

After the application program is downloaded to the computer 202 the application can be automatically started on the local computer 202 whereupon the user can open, edit or print the document as the creator would have been able to do 120. Alternate embodiments of the invention would include also include a web site, server, or bulletin board computer querying a user's computer to determine if the application is resident. In such an embodiment, a computer might log onto a web site, download a particular file, and while logged onto the web site, the site might query the user's computer to determine if the application package was present. A signal that the application package was missing would trigger the web site to autonomously down load the applications package directly to the user's computer.

A corollary of the invention and its automatic fetching of a computer program is an automatic deletion or disabling of the downloaded program. It is a possibility that the owner of the computer application program that was fetched is willing or able to grant a license for use under limited circumstances. For example, the fetched program may be a one-time use license so that after it is used to view or manipulate the files, it must be rendered inaccessible. Or, the fetched application program may be licensed for a fixed number of uses or a predetermined period of time. It is also possible that the applications program could be fetched from different sources, one source providing a more limited license than another source.

The search and fetching executable instructions can include functionality to delete or disable any downloaded file (data file or executable instructions) after some predetermined length of time. Alternatively, the downloaded files can be deleted or disable a program or file after it has been opened or run a predetermined number of times. By automatically disposing or disabling a program or file according to license terms and conditions, proprietary rights can be more effectively protected from infringement. At least one possible use of the automatic deletion feature would be to allow prospective customers to try out a particular program before they purchase or license it long term.

The following pseudo code demonstrates an exemplary implementation of the sequence of operations performed by the search and fetch executable instructions that are bundled with the data files to be opened.

As a first step, the data files of the combined file (executable and data files) are identified, and saved to disk for the local computer on which the executable is running. The following segment of pseudo code exemplifies how the file names are extracted and locally stored.

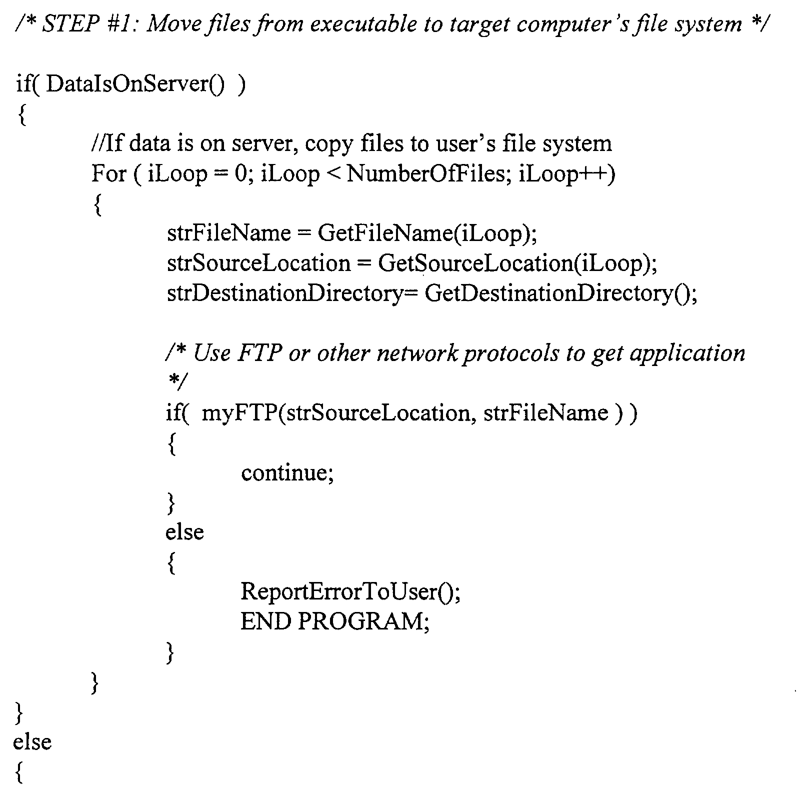

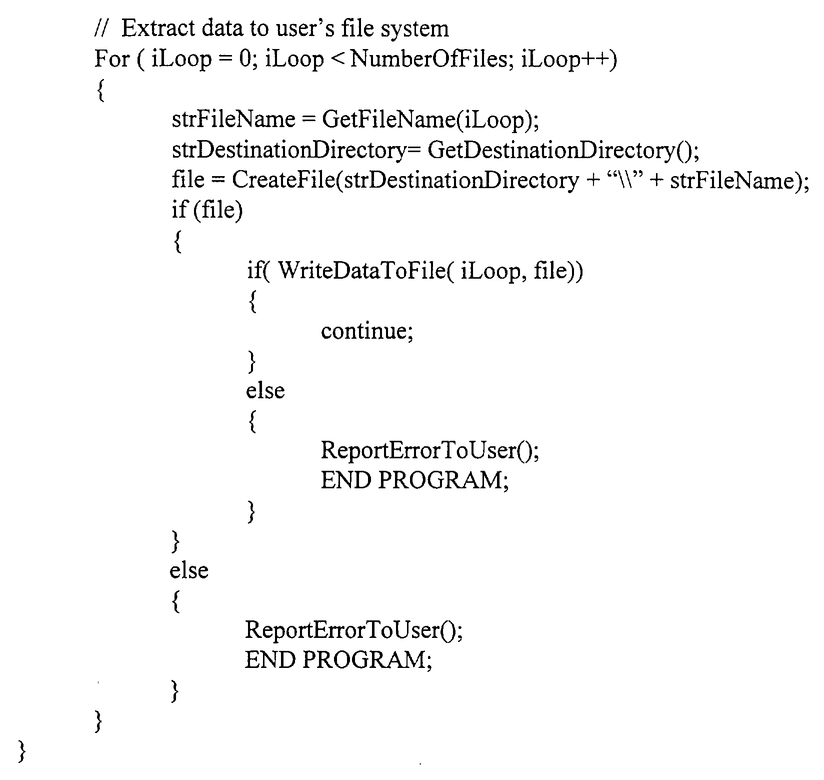

After the executable is stored onto the local machine, the code tests to determine if any of the files copied onto the local disk are compressed. If there are compressed files, they are appropriately de-compressed into identically-named decompressed files.

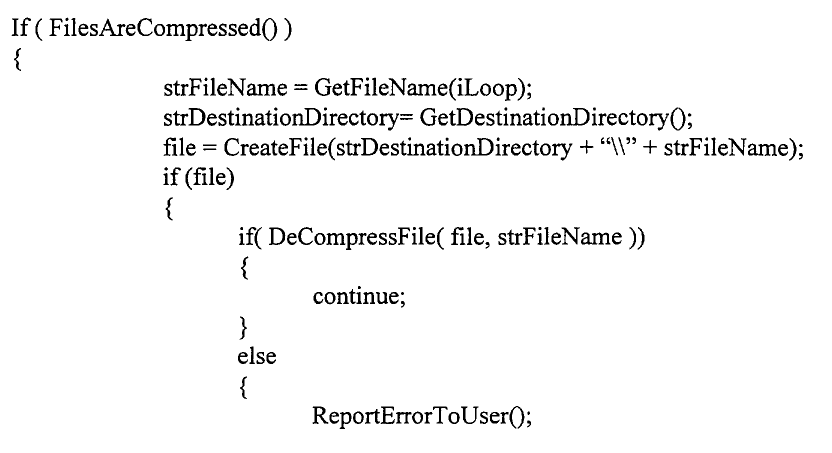

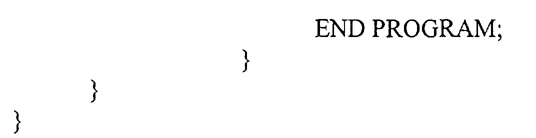

After the files are decompressed, the executable tests to determine if the required application is available. This can be done in a variety of ways.

A file allocation table can be searched, the system registry can be searched, finally, the application can simply be invoked and if the program does not run, it can be concluded that the program is not available.
/^{*} STEP #2: Determine if Application required to open data exists on target computer.

Once the application is located, a flag is set for subsequent processing.
BOOL bApplicationInstalled = IsApplicationInstalled();
/^{*} *STEP #3: Download application if necessary* ^{*}/

If the executable determines that the requisite application is not available, as indicated by the state of the aforementioned flag, an attempt is made to download the application. In the preferred embodiment, the application is downloaded using an internet connection, however, other file transfer mechanisms, including any sort of file sharing that is commonly available on local area networks could be used as well. 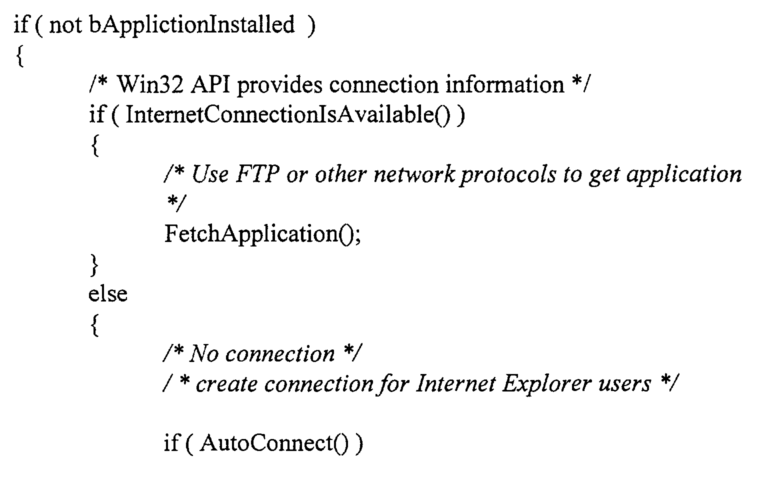 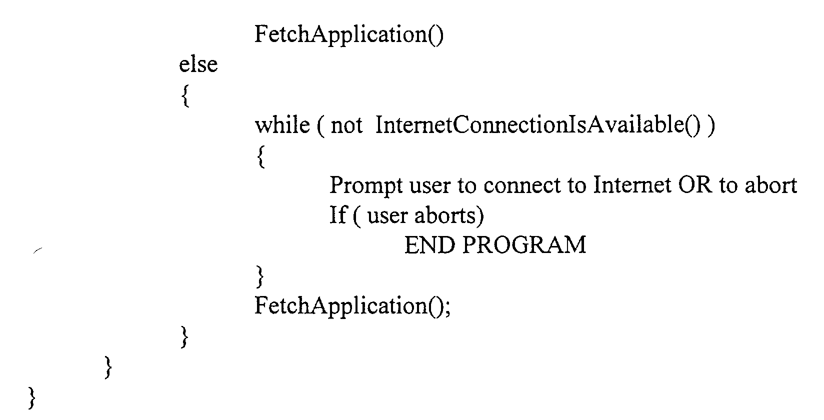 /^{*} *STEP 4: Start application on data* ^{*}/

Once the application is downloaded, the operating system of the target computer can be used to invoke the program. In the preferred embodiment, the micro-installer deletes itself.
/^{*} *STEP 4: Start application on data* ^{*}/

### (Use target computer's operating system to invoke the Application on the newly exploded data files.)

Using the aforementioned method an apparatus, a long-standing and pervasive problem associated with electronic file transfers can be avoided. When a file or files are electronically transferred to someone without the requisite program to use the files, obtaining the files can be done automatically using the disclosed method and apparatus.

In the preferred embodiment, the self-exploding microinstaller was implemented using ActiveX control. Alternate embodiments would certainly include using true executable code, compiled from an appropriate source-level program.

Finally, in at least one other alternate embodiment, the self-exploding micro-installer might be transmitted alone, with instructions to obtain certain data files for a user, from a web site or other computer. In such an embodiment, the data to be transferred from a creator to a user, would reside on another machine until the micro-installer summoned the data.

## Claims

1. A method of opening a file requiring a predetermined application program comprised of the steps of:
receiving at a first computer (100-2), a first file (106) containing executable program instructions for said computer (100-2) and also containing a predetermined file (101), said predetermined file (101) requiring a predetermined application program to be operated on, said executable program instructions being comprised of instructions operable to:
detect the presence of said predetermined application program on said first computer (100-2) and if said application program is not detected to obtain a copy of at least a portion of said predetermined application program from a second computer (100-1) via a data network (108,110) coupled to said first and second computers;
executing on said first computer the executable program instructions, said executable program instructions automatically detecting (114) that said predetermined application program is accessible to said first computer;
under the control of said executable program instructions, automatically receiving a copy of said predetermined application program from said second computer (116) at said first computer via said data network (108, 110).

2. The method of claim 1 further comprising the steps of:
compressing (102) at least a portion of said first file prior to the step of receiving said first file at said first computer; and
decompressing (112) at least said portion of said first file at said first computer, prior to the step of executing said application program.

3. The method of claim 1 wherein said step of automatically receiving a copy of said predetermined application program at said first computer via said data network is comprised of the steps of:
determining if said first computer is coupled to the internet;
initiating an internet web browser;
contacting a predetermined web site whereat said application program can be obtained;
requesting from said web site, the transmission of a copy of said application program; and
receiving said copy at said first computer.

4. Apparatus for automatically installing and reading a predetermined computer program comprised of:
a first computer (208) coupled to a data network (209);
a first computer data storage media (214) coupled to said first computer (208), said first computer storage media (214) containing a pre-formulated computer file, said pre-formulated computer file comprised of executable program instructions for said computer (208) that searches for and detects on said storage media (214) the presence of a predetermined computer file; if said predetermined computer file is undetected, said executable program instructions automatically accessing (220, 222, 224, 211) said data network (209) and obtaining from a second computer (210), a copy of said executable program instructions.

5. The apparatus of claim 4 wherein said pre-formulated computer file is comprised of a self-exploding compressed computer file.

6. A method of distributing a computer program to a first computer capable of being coupled to a data network from a second computer coupled to said data network comprised of the steps of:
receiving at said first computer (208) from a second computer (202), a pre-formulated computer file containing executable instructions for said first computer (208);
executing said executable instructions on said first computer (208), establishing the presence or absence of a predetermined application program on said first computer (208) by said executable instructions;
when said predetermined application program is not detected, obtaining a copy of at least a portion of said predetermined application program via said data network (209).

7. The method of claim 6 wherein said step of obtaining a copy of at least a portion of said application program further comprises the step of obtaining a copy of at least a portion of said application program from a third computer (210).

8. The method of claim 7 wherein said step of obtaining a copy of at least a portion of said predetermined application program from a third computer (210) via said data network (209) is comprised of the steps of:
invoking an internet web browser on said first computer (208);
establishing contact (220, 222, 224, 211) with said third computer (210) via an internet protocol address or a web site URL;
requesting the transmission of a file from said third computer (210); and
receiving said file from said third computer (210) at said first computer (208).

9. An apparatus for automatically obtaining an application program required to open a computer file, said apparatus comprising:
a computer means (208) for receiving a first file containing executable program instructions for said computer means, said first file also containing a predetermined data file, said predetermined data file capable of being opened only by a predetermined application program, said executable program instructions being operable to:
detect the presence of said predetermined application program on said computer and if said application program is not detected to:
obtain a copy of said predetermined application program via a data network coupled to said computer;
means for initiating the execution on said computer means the executable program instructions, said executable program instructions automatically detecting the presence or absence of said predetermined application program; and,
means for automatically receiving a copy of said predetermined application program at said computer via said data network.

10. The apparatus of claim 9 further comprising:
means for decompressing at east said portion of said first file at said computer, prior to executing said application program;
means for running said copy of said application program on said computer after automatically receiving said application program;
means for determining when said computer is coupled to the internet;
means for initiating an internet web browser at least in response to a signal from said means for determining;
means for contacting a predetermined web site at which said application program can be obtained;
means for requesting from said web site, the transmission of a copy of said application program; and
means for receiving said copy at said computer.
